# EUROPEAN PATENT SPECIFICATION

(11) **EP 1 946 943 B1**
(45) Date of publication and mention of the grant of the patent: **24.02.2010**
(21) Application number: 08250207.1
(22) Date of filing: 16.01.2008
(51) Int. Cl.: B60C 11/13

(54) **Pneumatic tire**
Luftreifen
Pneumatique

(30) Priority: 22.01.2007 JP 2007011974
(43) Date of publication of application: 23.07.2008
(73) Proprietor: Bridgestone Corporation, Tokyo 104-8340 (JP)
(72) Inventor: Nakamizo, Akira, Kodaira-shi, Tokyo 187-8531 (JP)
(74) Representative: Whalley, Kevin

(56) References cited:
- DE-A1- 4 403 662
- JP-A- 5 169 920
- JP-A- 8 150 812
- JP-A- 11 180 113

## Description

This invention relates to a pneumatic tire, and more particularly to a pneumatic tire establishing an improvement of resistance to uneven wear of tread rubber and a reduction of noise during running.

In the pneumatic tire, the tread portion includes a plurality of circumferential grooves continuously extending in a circumferential direction of the tire. In the tread portion having this type of circumferential groove, uneven wear called river wear or railway wear is caused along the edge of the circumferential groove regardless of the size, and in some cases, the uneven wear grows to extend between the mutual adjoining circumferential grooves to thereby generate a lost part based on the uneven wear, which is called a rib punch, in a land portion of the tread rubber. Such a lost part largely shortens the wearing life of the tread rubber but also remarkably deteriorates the steering stability of the vehicle and the ride comfort against vibrations. Also, it is well-known that tires having linear circumferential grooves are most disadvantageous for the uneven wear.

As a countermeasure for improving this type of uneven wear, for example, JP-A-2000-177323 discloses that the tread portion is provided with a plurality of stepped land parts, each of which being defined by a pair of grooves or notches continuously extending in a circumferential direction of a treading face so as to separate from a land portion of the tread rubber and having a surface downward from the treading face. In such a tire, the surface of the stepped land part is slip-contacted with a road surface in the ground contacting face of the tread portion during the running under loading, whereby a circumferential shear force in a direction opposite to the running direction of the vehicle or so-called braking force is concentrated in the stepped land parts to render the stepped land part into a uneven wear sacrificing part and hence the occurrence of uneven wear such as river wear or the like can be prevented or suppressed.

On the other hand, high-speed running accompanied with the remarkable development of expressway network is increasing. In this case, a wide-width linear circumferential groove becomes basically used as a groove dividing the land portion of the tread. Such a circumferential groove has a problem of causing new noise because a columnar resonance is generated in the groove. The columnar resonance is a phenomenon that the groove width is violently changed at the leading side/trailing side by the action of external force during the running of the tire under loading and high frequency vibrations are generated in the groove wall (or wall of the land part) accompanied therewith and oscillate air in the groove at the ground contact face and hence noise deterioration is caused by the acoustic resonance action based thereon.

As a means for preventing the deterioration of the noise due to the columnar resonance, for example, JP-A-H11-105511 discloses that it is useful to arrange a groove fence extending in a direction blocking air flow from the groove wall or groove bottom in the circumferential groove. In pneumatic tires for trucks and buses, since the groove volume of the circumferential groove is large, the columnar resonance causing the noise during running can be largely reduced by arranging flexible groove fences or blockers extending in a direction blocking the air flow from the groove wall or groove bottom in a part of the tread rubber at given intervals in the circumferential direction.

Moreover, in the tire disclosed in JP-A-2000-177323, it is known that noise due to the columnar resonance is caused in the stepped land part and between both groove walls of the circumferential groove opposing thereto rather than in the circumferential groove. Therefore, in order to suppress the noise due to the columnar resonance, it is necessary that the groove fence is arranged in at least one of both the groove walls in the circumferential groove opposing to the stepped land part likewise the technique disclosed in JP-A-H11-105511. However, the circumferential groove opposing to the stepped land part is narrow in the groove width, so that the groove bottom of the circumferential groove and the groove fence can not be connected to each other at a smooth curvature, and hence there is a problem that stress easily concentrates in the connecting portion therebetween to cause cracks in the groove bottom.

Attention is also drawn to the disclosures of JP-08-150812 A and JP-05-169902 A.

It is, therefore, an object of the invention to provide a pneumatic tire in which the noise is reduced and uneven wear is hardly caused by arranging not only the stepped land part but also the properly adjusted groove fence in the circumferential groove without causing cracks in the groove bottom.

The inventor has made various studies in order to solve the above problems and found that the form of the groove fence is made so as to have a thinned portion by cutting out the groove bottom portion of the circumferential groove viewing at a section perpendicular to the circumferential groove, whereby the stress concentration in the joint portion between the thinned portion of the groove fence and the groove bottom portion of the circumferential groove can be suppressed to effectively prevent cracks easily generated at the groove bottom. As a result, it is possible to arrange the groove fence in the groove wall of the circumferential groove opposing to the stepped land part, and hence there has been accomplished a pneumatic tire having low noise and hardly causing uneven wear.

The invention is based on the above knowledge and the summary thereof is as follows.
(1) A pneumatic tire comprising a tread portion provided with circumferential grooves extending in a circumferential direction of the tire in which the tread portion is divided into plural land portions by these circumferential grooves and a stepped land part as an uneven wear sacrificing portion is arranged in the circumferential groove and at a groove bottom portion separated from both groove walls of the circumferential groove so as to have a surface located inward from a treading face of the land portion in a radial direction of the tire and slip-contacting with a road surface during the running of the tire under loading, characterized in that groove fences protruding toward the stepped land part are disposed in at least one of both groove walls of the circumferential groove at predetermined intervals in an extending direction of the circumferential groove and the groove fence has a thinned portion having a form of cutting out a portion facing to the bottom portion of the circumferential groove viewing at a section perpendicular to the circumferential groove.

(2) A pneumatic tire according to item (1), wherein the thinned portion of the groove fence is connected to the groove bottom of the circumferential groove at a constant curvature of radius.

(3) A pneumatic tire according to item (1) or (2), wherein a maximum protruding width of the groove fence is within a range of 20-80% of a width between the stepped land part and the groove wall of the circumferential groove when the groove fence is not disposed.

(4) A pneumatic tire according to item (1), (2) or (3), wherein at least one of the groove fences is disposed in a ground contact area of the tire under conditions that a maximum air pressure and a maximum load capacity are applied to the tire.

(5) A pneumatic tire according to any one of items (1)-(4), wherein the groove fence is disposed at only the groove wall of the circumferential groove located outward in a widthwise direction of the tire.

(6) A pneumatic tire according to any one of items (1)-(5), wherein the circumferential groove is a zigzag groove extending zigzag in the circumferential direction of the tire.

According to the invention, the groove fences protruding toward the stepped land part are disposed in at least one of both groove walls of the circumferential groove opposing to the stepped land part at predetermined intervals so as to have the thinned portion having a form of cutting out a portion facing to the bottom portion of the circumferential groove viewing at a section perpendicular to the circumferential groove, whereby the stress concentration is suppressed in the joint portion between the thinned portion of the groove fence and the groove bottom portion of the circumferential groove and hence there can be provided a pneumatic tire having a low noise and hardly causing the uneven wear without causing cracks at the groove bottom.

The invention will be described in detail with reference to the accompanying drawings, wherein
FIG. 1 is a partial developed view of a tread pattern in a pneumatic tire according to the invention;
FIG. 2 is a section view taken along a line I-I in FIG. 1;
FIG. 3 is a section view in a widthwise direction of a circumferential groove in a pneumatic tire wherein a groove fence of a conventional shape is disposed on a groove wall of the circumferential groove opposing to a stepped land part; and
FIG. 4 is a section view in a widthwise direction of a circumferential groove provided with a groove fence having a thinned portion of various shapes.

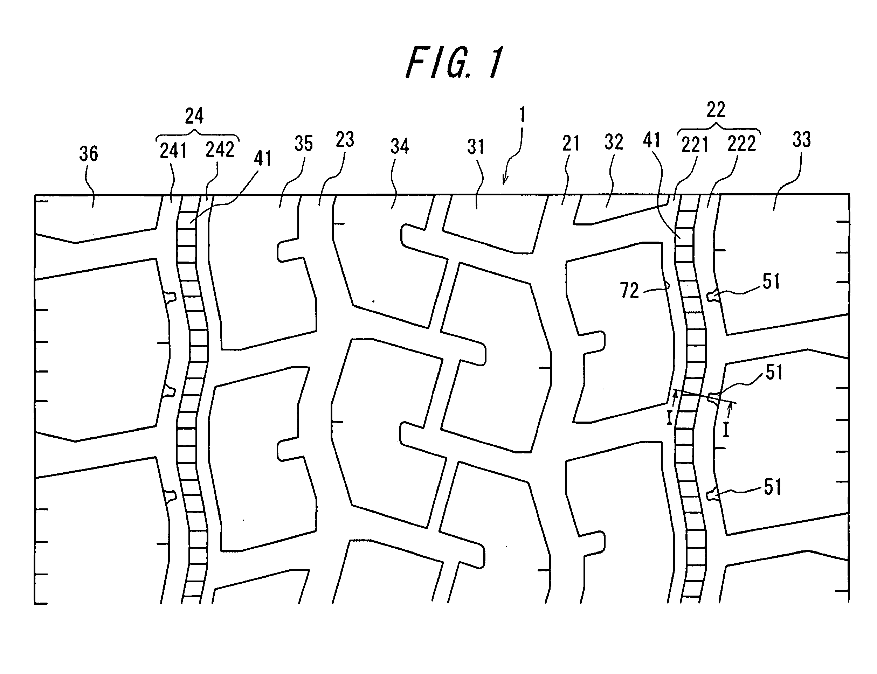

The construction of the invention is explained with reference to FIGS. 1-4 below.

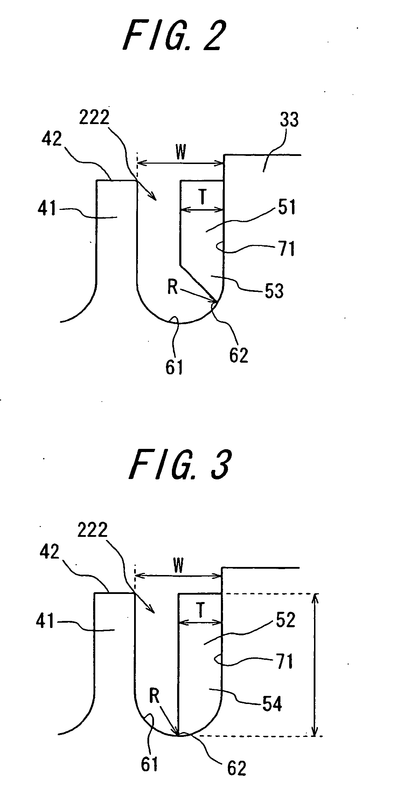

In FIG. 1 is shown a pneumatic tire according to the invention as a developed view of a treading face thereof, and FIG. 2 is a section view taken along a line I-I in FIG. 1. In the pneumatic tire according to the invention, a tread portion 1 is provided with plural circumferential grooves extending in a circumferential direction of the tire, four circumferential grooves 21-24 in FIG. 1, in which the tread portion 1 is divided into plural land portions 31-36 by these circumferential grooves 21-24. In each of the circumferential grooves 22 and 24 is disposed a stepped land part 41 acting as an uneven wear sacrificing portion for the tire land portion and having a surface 42 located inward from a treading face of the land portion in a radial direction of the tire and slip-contacting with a road surface during the running of the tire under loading.

As shown in FIG. 2, groove fences 51 protruding toward the stepped land part 41 are disposed at predetermined intervals on at least one of both groove walls 71, 72 of each of the circumferential grooves 22, 24 opposing to the stepped land part 41. The groove fence 51 has a thinned portion 53 having a form of cutting out a portion facing to a bottom portion of the circumferential groove 22 viewing at a section perpendicular to the circumferential groove 22.

FIG. 3 is a schematic view of a pneumatic tire provided with a groove fence 52 of the conventional shape disposed on the groove wall of the circumferential groove 22 opposing to the stepped land part viewing at a section perpendicular to the circumferential groove 22. The inventor has made various studies of the problems that since a width of a circumferential groove portion 222 opposite to the stepped land part 41 is narrow and a curvature radius R of the groove bottom 61 is small, if the groove fence 52 is disposed on the groove wall 71, stress is easily concentrated in a joint portion 62 between a lower part 54 of the groove fence and a groove bottom part of the circumferential groove portion 222 to generate cracks in the joint portion 62, and hence the groove fence 52 can not be arranged and also the columnar resonance can not be suppressed in the circumferential groove portion 222 opposite to the stepped land part 41. As a result, it has been found that as shown in FIG. 2, the shape of the groove fence 51 is made to have a thinned portion 53 having a form of cutting out a portion facing to a bottom of the circumferential groove portion 222 viewing at a section perpendicular to the circumferential groove 22, whereby there is suppressed stress concentration in a joint portion 62 between the thinned portion 53 of the groove fence 51 and the groove bottom 61 of the circumferential groove portion 222, and hence the groove fence 51 can be disposed in the circumferential groove portion 222 opposite to the stepped land part 41 without generating cracks at the groove bottom 61.

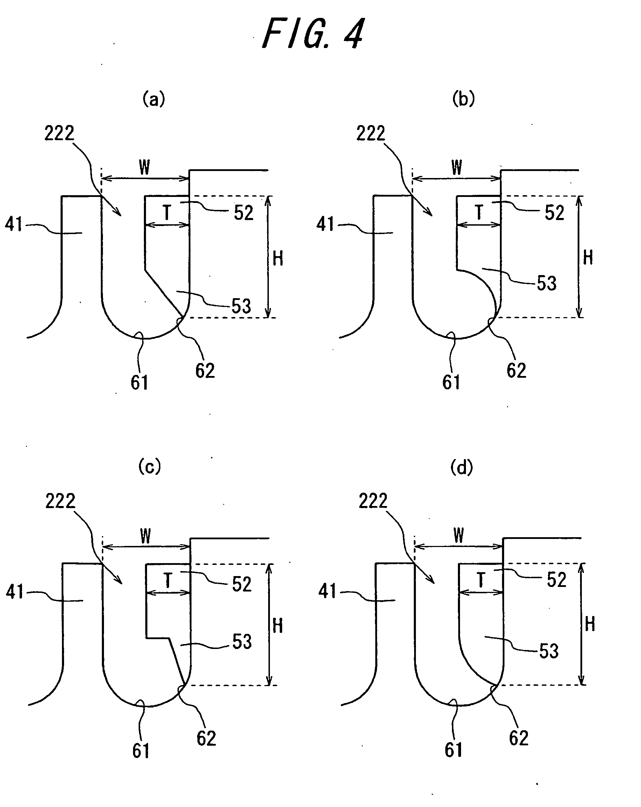

Moreover, the thinned portion 53 is a portion of the groove fence 51 facing to the groove bottom and cutting out toward the groove wall 71. The cutout form of the thinned portion 53 is not particularly limited, and can include various forms as shown in FIGS. 4(a)-(d). Also, it is preferable that the thinned portion 53 of the groove fence is connected to the groove bottom 61 of the circumferential groove portion 222 at a constant curvature radius R. As the curvature radius of the groove bottom 61 becomes small, stress applied to the groove bottom becomes large to cause the occurrence of cracks. Therefore, the constant curvature radius R is given to the joint portion with respect to the groove bottom 61 of the circumferential groove portion 222, whereby the stress applied to the groove bottom can be reduced effectively.

Also, it is preferable that a maximum protruding width T of the groove fence 51 is within a range of 20-80% of a width W between the stepped land part 41 and the groove wall 71 of the circumferential groove 22. When the width T is less than 20% of the width W, sound escapes out from gaps and the effect of reducing the columnar resonance is insufficient, while when it exceeds 80%, if oblique force such as side force or the like is applied to the tire, the groove fences 51 are deformed by collision with the stepped land part to cause cracks in the groove bottom 61. Further, it is preferable that the thickness of the groove fence 51 in the circumferential direction of the tire is about 0.5-3.0 mm. When the thickness is less than 0.5 mm, the effect of reducing the columnar resonance in the groove is hardly obtained, while when it exceeds 3.0 mm, the drainage property in the treading face is deteriorated.

In addition, it is preferable that at least one groove fence is arranged in the ground contact region of the tread under conditions of applying a maximum air pressure and a maximum load capacity to the tire. By arranging at least one groove fence in the ground contact region during the running of the tire is always developed the function of the groove fence, whereby it is possible to continually suppress the columnar resonance. Moreover, the terms "maximum air pressure" and "maximum load capacity" are those defined in JATMA YEAR BOOK of Japan Automobile Tire Manufacturers Association (JATMA).

As shown in FIG. 1, the groove fences are preferably disposed on only the groove walls of the circumferential groove portions 222, 242 located outward in the widthwise direction of the tire. Since the groove width of the circumferential groove portion is narrower than that of the grooves 21, 23 and the curvature radius R of the groove bottom 61 is small, if the conventional groove fence is used, cracks are generated in the groove bottom.

Furthermore, the circumferential grooves 21-24 are preferably zigzag grooves extending zigzag in the circumferential direction of the tire. In this way, the extending length of the circumferential groove can be varied to change the columnar resonance frequency.

Although the above is merely explained as an embodiment of the invention, various modifications may be made within the scope of the invention.

### Example 1

In this example, there is provided a 15°-tapered radial tire for truck and bus (tire size: 11R22.5 16PR, rim size: 8.25) as a sample of a pneumatic tire under an air pressure of 800 kPa, in which stepped land parts are disposed in circumferential grooves and groove fences each having a thinned portion of a form shown in FIG. 4(a) with a thickness of 2 mm, a maximum protruding width T of 3 mm, a length H in a radial direction of the tire of 13 mm and a curvature radius R of 1 mm are arranged on a groove wall of a circumferential groove portion (depth: 16.7 mm, width: 5 mm, curvature radius: 2 mm) located outward in the widthwise direction of the tire opposing to the stepped land part at intervals of 250 mm in the circumferential direction of the tire.

### Comparative Example 1

There is provided a pneumatic tire having the same structures as in Example 1 except that the groove fences are not arranged in the circumferential groove opposing to the stepped land part.

### Comparative Example 2

There is provided a pneumatic tire having the same structures as in Example 1 except that groove fences each having a thickness of 2 mm, a maximum protruding width T of 2.5 mm, a radially length H of 15 mm and a curvature radius R in groove bottom portion of 1 mm as shown in FIG. 3 are arranged on the circumferential groove portion opposing to the stepped land part.

### Evaluation method

With respect to the thus obtained pneumatic tires, indoor noise test and indoor drum test are carried out by rotating at test speeds of 35 km/h, 60 km/h and 80 km/h under loading of 3000 kg. In Table 1, a noise (dB%) is shown by a relative ratio on the basis that the magnitude of noise generated in the tire of Comparative Example 1 is 100%. Also, the presence or absence of cracks generated in the groove bottom of the circumferential groove having the groove fences after the running over 10000 km on the drum is shown in Table 1.

**Table 1**

| | Test speed 35 km/h | | Test speed 60 km/h | | Test speed 80 km/h | |
|---|---|---|---|---|---|---|
| | Noise (dB%) | Cracks | Noise (dB%) | Cracks | Noise (dB%) | Cracks |
| Example 1 | 99 | absence | 97 | absence | 98 | absence |
| Comparative Example 1 | 100 | absence | 100 | absence | 100 | absence |
| Comparative Example 2 | 99 | absence | 97 | presence | 98 | presence |

As seen from the results of Table 1, the noise can be reduced by 1-3% in Example 1 and Comparative Example 2 each having groove fences as compared with Comparative Example 1 having no groove fence in the circumferential groove opposing to the stepped land part. Furthermore, cracks are not generated at the groove bottom in Example 1 having a proper form of the groove fence and Comparative Example 1 having no groove fence, while cracks are generated at the groove bottom in Comparative Example 2 having an improper form of the groove fence when the test speed is 60 km/h or more.

According to the invention, the groove fences protruding toward the stepped land part are disposed in at least one of both groove walls of the circumferential groove opposing to the stepped land part at predetermined intervals so as to have the thinned portion having a form of cutting out a portion facing to the bottom portion of the circumferential groove viewing at a section perpendicular to the circumferential groove, whereby stress concentration is suppressed in the joint portion between the thinned portion of the groove fence and the groove bottom portion of the circumferential groove and hence there can be provided a pneumatic tire having low noise and hardly causing uneven wear without causing cracks at the groove bottom.

## Claims

1. A pneumatic tire comprising a tread portion (1) provided with circumferential grooves (21, 22, 23, 24) extending in a circumferential direction of the tire in which the tread portion is divided into plural land portions (31-36) by said circumferential grooves, and a stepped land part (41) as an uneven wear sacrificing portion is arranged in the circumferential groove (22, 24) and at a groove bottom portion (61) separated from both groove walls (71, 72) of the circumferential groove so as to have a surface (42) located inward from a treading face of the land portion in a radial direction of the tire and slip-contacting with a road surface during the running of the tire under loading, **characterized in that** groove fences (51) protruding toward the stepped land part (41) are disposed in at least one of both groove walls (71, 72) of the circumferential groove (22, 24) at predetermined intervals in an extending direction of the circumferential groove and the groove fence (51) has a thinned portion (53) having a form of cutting out a portion facing to the bottom portion (61) of the circumferential groove (22, 24) viewing at a section perpendicular to the circumferential groove.

2. A pneumatic tire as claimed in claim 1, wherein the thinned portion (53) of the groove fence (51) is connected to the groove bottom (61) of the circumferential groove at a constant curvature of radius (R).

3. A pneumatic tire as claimed in claim 1 or 2, wherein a maximum protruding width (T) of the groove fence (51) is within a range of 20-80% of a width (W) between the stepped land part (41) and the groove wall (71) of the circumferential groove (22, 24) when the groove fence is not disposed.

4. A pneumatic tire as claimed in any of claims 1 to 3, wherein at least one of the groove fences (51) is disposed in a ground contact area of the tire under conditions that a maximum air pressure and a maximum load capacity are applied to the tire.

5. A pneumatic tire as claimed in any of claims 1 to 4, wherein the groove fence (51) is disposed at only the groove wall of the circumferential groove located outward in a widthwise direction of the tire.

6. A pneumatic tire as claimed in any of claims 1 to 5, wherein the circumferential groove is a zigzag groove extending zigzag in the circumferential direction of the tire.

## Patentansprüche

1. Luftreifen, der einen Laufflächenabschnitt (1) aufweist, der mit Umfangsrillen (21, 22, 23, 24) versehen ist, die sich in einer Umfangsrichtung des Reifens erstrecken, wobei der Laufflächenabschnitt in mehrere Stegabschnitte (31-36) durch die Umfangsrillen unterteilt wird, und wobei ein abgestufter Stegteil (41) als ein Abschnitt, der einer ungleichmäßigen Abnutzung geopfert wird, in der Umfangsrille (22, 24) angeordnet und in einem Bodenabschnitt (61) der Rille von beiden Rillenwänden (71, 72) der Umfangsrille getrennt ist, um so eine Fläche (42) zur Verfügung zu haben, die nach innen von einer Laufflächenseite des Stegabschnittes in einer radialen Richtung des Reifens und in Rutschkontakt mit einer Straßenoberfläche während des Laufens des Reifens unter Belastung angeordnet ist, **dadurch gekennzeichnet, dass** Rillenzäune (51), die in Richtung des abgestuften Stegteils (41) vorstehen, an mindestens einer der beiden Rillenwände (71, 72) der Umfangsrille (22, 24) in vorgegebenen Abständen in einer Richtung, in der sich die Umfangsrille erstreckt, angeordnet sind, und dass der Rillenzaun (51) einen abgeschwächten Abschnitt (53) aufweist, der eine Form eines Ausschnittes eines Abschnittes aufweist, der zum Bodenabschnitt (61) der Umfangsrille (22, 24) hin liegt, wenn man einen Schnitt senkrecht zur Umfangsrille betrachtet.

2. Luftreifen nach Anspruch 1, bei dem der abgeschwächte Abschnitt (53) des Rillenzaunes (51) mit dem Rillenboden (61) der Umfangsrille mit einer konstanten Krümmung des Radius (R) verbunden ist.

3. Luftreifen nach Anspruch 1 oder 2, bei dem eine maximale vorstehende Breite (T) des Rillenzaunes (51) innerhalb eines Bereiches von 20 bis 80 % einer Breite (W) zwischen dem abgestuften Stegteil (41) und der Rillenwand (71) der Umfangsrille (22, 24) liegt, wenn der Rillenzaun nicht angeordnet ist.

4. Luftreifen nach einem der Ansprüche 1 bis 3, bei dem mindestens einer der Rillenzäune (51) in einer Aufstandsfläche des Reifens unter Bedingungen angeordnet ist, dass ein maximaler Luftdruck und eine maximale Belastbarkeit beim Reifen zur Anwendung gebracht werden.

5. Luftreifen nach einem der Ansprüche 1 bis 4, bei dem der Rillenzaun (51) nur in der Rillenwand der Umfangsrille angeordnet ist, die nach außen in einer Breitenrichtung des Reifens angeordnet ist.

6. Luftreifen nach einem der Ansprüche 1 bis 5, bei dem die Umfangsrille eine Zickzackrille ist, die sich zickzackartig in der Umfangsrichtung des Reifens erstreckt.

## Revendications

1. Bandage pneumatique, comprenant une partie de bande de roulement (1) comportant des rainures circonférentielles (21, 22, 23, 24) s'étendant dans une direction circonférentielle du bandage pneumatique, la partie de bande de roulement étant divisée en plusieurs parties d'appui (31-36) par lesdites rainures circonférentielles, une partie d'appui étagée (41), constituant une partie sacrificielle d'usure irrégulière, étant agencée dans la rainure circonférentielle (22, 24) et au niveau d'une partie de base de la rainure (61), séparée des deux parois de rainure (71, 72) de la rainure circonférentielle, de sorte à comporter une surface (42) agencée vers l'intérieur d'une face de la bande de roulement de la partie d'appui, dans une direction radiale du bandage pneumatique, et contactant par glissement une surface de la route au cours du roulement du bandage pneumatique sous charge, **caractérisé en ce que** des cloisons de rainure (51) débordant vers la partie d'appui étagée (41) sont agencées dans au moins une des deux parois de rainure (71, 72) de la rainure circonférentielle (22, 24), à des intervalles prédéterminés dans une direction d'extension de la rainure circonférentielle, la cloison de la rainure (51) comportant une partie rétrécie (53) ayant une forme propre à découper une partie faisant face à la partie de base (61) de la rainure circonférentielle (22, 24), vue dans une section perpendiculaire à la rainure circonférentielle.

2. Bandage pneumatique selon la revendication 1, dans lequel la partie rétrécie (53) de la cloison de la rainure (51) est connectée au fond de rainure (61) de la rainure circonférentielle, à un rayon (R) de courbure constant.

3. Bandage pneumatique selon les revendications 1 ou 2, dans lequel une largeur de débordement maximale (T) de la cloison de la rainure (51) est comprise dans un intervalle représentant 20 à 80% d'une largeur (W) entre la partie d'appui étagée (41) et la paroi de rainure (71) de la rainure circonférentielle (22, 24), lorsque la cloison de la rainure n'est pas mise en place.

4. Bandage pneumatique selon l'une quelconque des revendications 1 à 3, dans lequel au moins une des cloisons de la rainure (51) est agencée dans une zone de contact avec le sol du bandage pneumatique, dans des conditions dans lesquelles une pression d'air maximale et une capacité de charge maximale sont appliquées au bandage pneumatique.

5. Bandage pneumatique selon l'une quelconque des revendications 1 à 4, dans lequel la cloison de la rainure (51) est agencée uniquement à la paroi de rainure de la rainure circonférentielle située vers l'extérieur dans une direction de la largeur du bandage pneumatique.

6. Bandage pneumatique selon l'une quelconque des revendications 1 à 5, dans lequel la rainure circonférentielle est une rainure en zigzag, s'étendant en zigzag dans la direction circonférentielle du bandage pneumatique.
